(19) Europäisches Patentamt
European Patent Office
Office européen des brevets

(11) **EP 3 422 545 B1**

(12) **EUROPEAN PATENT SPECIFICATION**

(45) Date of publication and mention
of the grant of the patent:
**07.10.2020   Bulletin 2020/41**

(51) Int Cl.:
**H02K 41/03** (2006.01)       **H02K 7/08** (2006.01)
**F16C 32/04** (2006.01)       **H02K 16/00** (2006.01)

(21) Application number: **17178165.1**

(22) Date of filing: **27.06.2017**

(54) **ELECTROMECHANICAL ACTUATOR**

ELEKTROMECHANISCHER AKTUATOR

ACTIONNEUR ÉLECTROMÉCANIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.01.2019   Bulletin 2019/01**

(73) Proprietor: **ETEL S.A.**
**2112 Môtiers (CH)**

(72) Inventors:
• **MIRIC, Spasoje**
  **8008 Zürich (CH)**
• **TÜYSÜZ, Arda**
  **8051 Zürich (CH)**

• **KOLAR, Johann Walter**
  **8044 Zürich (CH)**

(74) Representative: **Frei Patent Attorneys**
**Frei Patentanwaltsbüro AG**
**Postfach**
**8032 Zürich (CH)**

(56) References cited:
**EP-A2- 1 617 546        CN-A- 102 843 015
CN-A- 105 762 991      US-A1- 2003 071 530**

• **SILBER S ET AL: "Design aspects of bearingless
slice motors", IEEE/ASME TRANSACTIONS ON
MECHATRONICS,, vol. 10, no. 6, 1 December 2005
(2005-12-01), pages 611-617, XP002776181,**

## Description

The invention relates to the field of electrical drives or actuators, and in particular to linear- rotary actuators comprising a tubular linear actuator.

## BACKGROUND REGARDING TUBULAR LINEAR ACTUATORS

Tubular linear actuators (TLAs) are used in several industrial applications where reciprocating linear motions are needed. This motion can be slow and low-frequency as in wave energy harvesters [Prudell], or fast and high-frequency as in linear compressors and pumps [Jiao].

Movers in these actuators are predominantly supported with mechanical bearings, which not only impose a limit on the lifetime and require lubrication, but also create contamination due to wear. Moreover, in high-precision positioning applications, mechanical bearings deteriorate positioning accuracy due to thermal deformation.

In order to avoid the drawbacks of mechanical bearings, contactless mover suspension systems such as magnetic suspension can be used. For example, a TLA with two standalone magnetic bearings (MBs) on each axial end of the mover is shown in [Tsai] and [Costa]. However, in such systems, the additional MBs increase the volume, the complexity, and the cost of the system. Such drawbacks can be avoided by integrating the magnetic bearings into the actuator.

Rotational actuators with integrated MBs are known from literature. Such actuators, which are capable of both actuation and magnetic suspension of the mover are called self-bearing, or bearingless drives.

It is well-known from [Silber] that, in rotating permanent-magnet synchronous machines, the interaction of a stator magnetic field with $p_{stator}$ pole pairs, with a rotor magnetic field with $p_{rotor}$ pole pairs produces a

- Rotational torque, for $p_{stator} = p_{rotor}$
- Bearing (suspension, lift) force, for $p_{stator} = p_{rotor}$ +/-1

Hence, by choosing an appropriate winding arrangement, which can produce magnetic fields both with $p_{rotor}$ and $p_{rotor}$+/-1 pole pairs, both rotational actuation and rotor suspension, hence self-bearing operation, can be achieved in rotational actuators.

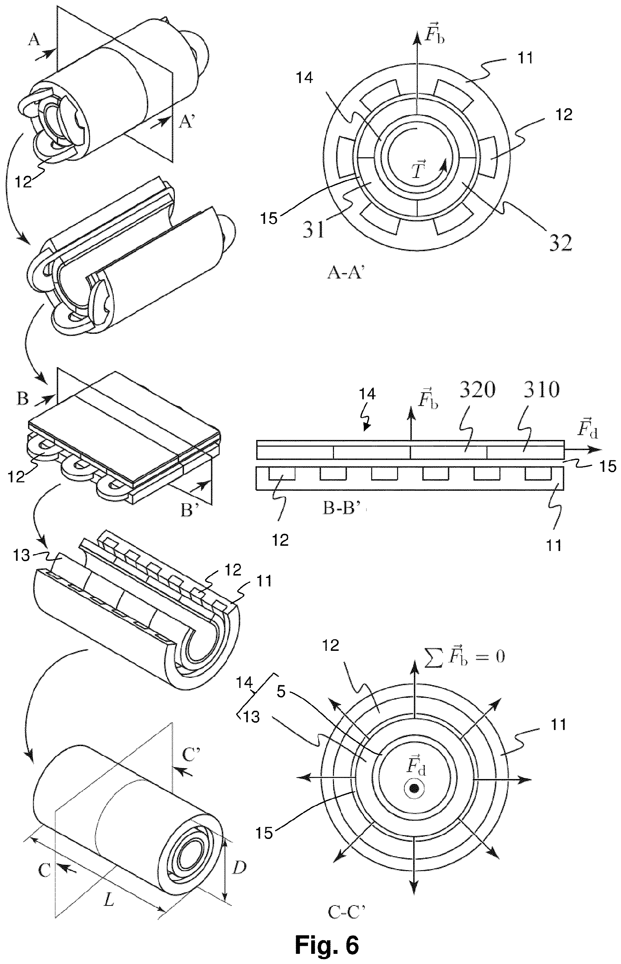

However, the above-mentioned design strategy cannot be applied to TLAs, as shown in **Fig. 6.** Unfolding a self-bearing rotational actuator that is capable of generating torque T and bearing force $F_b$ leads to a self-bearing linear actuator. Here, the torque T is converted to linear driving force $F_d$, and the bearing force $F_b$ is kept. In a second step, folding the self-bearing linear actuator in the transverse direction yields a TLA. In this step, the linear driving force $F_d$ is kept; however, the bearing force $F_b$ now only has radial components that are uniformly distributed around the mover's circumference. Hence, the net radial force is zero ($\Sigma F_b = 0$). Consequently, the self-bearing feature is lost.

[Prudell] J. Prudell, M. Stoddard, E. Amon, T. K. Brekken, and A. von Jouanne, "A Permanent- Magnet Tubular Linear Generator for Ocean Wave Energy Conversion," IEEE Transactions on Industry Applications, vol. 46, no. 6, pp. 2392-2400, 2010.

[Jiao] Z. Jiao, T. Wang, and L. Yan, "Design of a Tubular Linear Oscillating Motor with Novel Compound Halbach Magnet Array," IEEE/ASME Transactions on Mechatronics, no. 99, 2016.

[Tsai] N. C. Tsai and C. W. Chiang, "Design and Analysis of Magnetically-Drive Actuator Applied for Linear Compressor," Mechatronics, vol. 20, no. 5, pp. 596-603, 2010.

[Costa] E. A. da Costa, I. E. Chabu, and J. J. da Cruz, "Active Magnetic Bearing for Tubular Linear Induction Motor Applied to Onshore Oil Exploitation," in Proc. of 12th International Symposium on Magnetic Bearings (ISMB), Wuhan, China, August 2010.

[Silber] S. Silber, W. Amrhein, P. Bosch, R. Schob, and N. Barletta, "Design aspects of bearingless slice motors," IEEE/ASME Transactions on Mechatronics, vol. 10, no. 6, pp. 611-617, Dec 2005.

## BACKGROUND REGARDING LINEAR- ROTARY ACTUATORS

Highly dynamic and precise linear-rotary actuators (LiRAs) are used in several different applications such as robot arms and end effectors [Meessen].

Typical bearings used in these actuators are mechanical or air bearings. Mechanical bearings have some inherent drawbacks such as contamination and need for lubrication. Air bearings, on the other hand, are characterized by increased system complexity due to the external pressured air supply, and the inability to work in low-pressure environments.

Even though magnetic bearings (MBs) would overcome these issues [Baumgartner], LiRAs with magnetic bearings have not been seen in literature. An additional advantage that magnetic bearings would bring is the ability to actively control the mover position with an exactness determined by the sensor and amplifier accuracies, i.e. a decoupling of the positioning accuracy from mechanical tolerances and thermal drift.

[Xu] discloses a machine with two stators, henceforth called double stator (DS). The DS machine is a combination of a Tubular Linear Electrical Machine and a Rotating Electrical Machine. The rotating machine is inserted radially inside the linear machine. The moving part that is driven to rotate and/or translate is called the mover. It is sandwiched between an inner and an outer stators and can move axially (due to the forces generated by the outer stator), and rotate (due to the torque generated by the inner stator). The mover comprises a cylindrical iron, and permanent magnets on both its inner and outer surfaces. Inner and outer magnets are magnetized as known for surface mounted permanent magnet rotating and linear machines. The iron magnetically separates both machines, so they can be designed and optimized independently, with the only condition being one needs to fit inside the other, provided two air gaps exist (one between the outer stator and the mover, second between the mover and the inner stator). However, the motor uses mechanical bearings to support both linear and rotary motion, with the usual disadvantages of such bearings, i.e. friction, wear, contamination, losses, limited acceleration, etc.

**References cited:**

[Meessen] K. J. Meessen, J. J. H. Paulides and E. A. Lomonova, "Analysis and Design Considerations of a 2-DoF Rotary-Linear Actuator," in Proc. on IEEE International Electric Machines & Drives Conference (IEMDC), 2011, pp. 336-341

[Baumgartner] T. Baumgartner, R. M. Burkart, and J. W. Kolar, "Analysis and Design of a 300-W 500 000-r/min Slotless Self-Bearing Permanent-Magnet Motor," IEEE Transactions on Industrial Electronics, vol. 61, no. 8, pp. 4326-4336, 2014.

[Xu] L. Xu, M. Lin, X. Fu, X. Fu, X. Zhu, C. Zhang and W. Wu, "Orthogonal Magnetic Field Analysis of a Double Stator Linear-Rotary Permanent Magnet Motor with Orthogonally Arrayed Permanent Magnets," IEEE Transactions on Magnetics, early access

CN 105762991 A discloses a double stator linear rotation permanent motor, with an outer stator and an inner stator, each with associated windings, and a tubular rotor carrying permanent magnets and being arranged to rotate around and move along a common axis of the two stators.

US 2003/071530 A1 discloses an electrical machine with two coaxial motors having the same number of magnet pole teeth, the pole teeth of the two motors being offset by a mechanical angle relative to one another, in order to reduce cogging torque.

**GENERAL DESCRIPTION**

It is the object of the invention to create a linear-rotary actuator, which overcomes the disadvantages mentioned above.

This object is achieved by an actuator according to claim 1.

Claim 1 comprises two aspects of the invention. A first aspect related to a linear-rotary actuator and a second aspect related to a tubular linear actuator, which is a part of the linear-rotary actuator.

According to a **first aspect** of the invention, which is not claimed independently from the second aspect, there is provided a **linear-rotary actuator** which comprises active magnetic bearings.

The linear-rotary actuator is an electrical machine comprising a linear actuator section and a rotary actuator section arranged to drive a mover to rotate around a machine axis and to move (in a translational movement) along the machine axis. The mover is of a tubular shape and is arranged between an outer stator and an inner stator. The rotary actuator section comprises at least a first rotary actuator and a second rotary actuator, these rotary actuators constituting magnetic bearings and being arranged at separate locations along the machine axis.

In other words, the rotary actuators are distanced from one another along the machine axis. There being two separate rotary actuators distanced from one another allows to control bearing forces of the two rotary actuators to control tilting of the mover relative to the machine axis.

As a result there is provided a linear-rotary actuator (generating torque and/or axial forces) with integrated magnetic bearings (generating radial forces), leading to a so-called self-bearing (bearingless) drive. This allows for highly dynamic linear-rotary positioning systems.

In embodiments, stator windings of the first rotary actuator and stator windings of the second rotary actuator are configured so that they can be powered separately. That is, so that they can conduct separately controllable currents.

In other words, the stator windings of the two rotary actuators are not connected in a manner that their currents depend on one another. For example, they are not connected in a series or parallel arrangement. This allows to drive and control the two rotary actuators independently.

In embodiments, the linear-rotary actuator comprises an electrical power supply that is arranged to power the rotary actuators separately. That is, currents in the windings of the first rotary actuator can be controlled independently from currents in the windings of the second rotary actuator. Consequently, torques and bearing forces in the two rotary actuators can be controlled independently. Controlling the bearing forces allows to control tilting of the mover relative to the machine axis.

In embodiments, at least one of the first rotary actuator and the second rotary actuator comprises **combined** windings to provide both torque forces and radial forces.

In embodiments, at least one of the first rotary actuator and the second rotary actuator comprises **separate** windings to provide torque forces and radial forces.

In embodiments, stator windings and corresponding stator teeth of the first rotary actuator are rotated around the machine axis, relative to stator windings and corresponding poles of the second rotary actuator, by a **cogging compensation angle** $\Delta\varphi_{cog}$. This allows to minimise a total cogging torque resulting from the superposition of cogging torques arising in the two rotary actuators.

Rotating the two inner stators by $\Delta\varphi_{cog}$ causes the induced voltages in the two inner stators to be phase shifted by the same angle. Two inverters are used to drive these two inner stators separately, in particular such that both can have an optimal current at a given rotational angle, for a given torque reference. The two phase shifted systems have cogging torques with a waveform containing a fundamental frequency. The phase shift is selected so that the phase shift of the fundamental waveform is 180 degrees and they add up to zero.

In embodiments, neighboring or adjacent stator windings and corresponding teeth of the linear actuator are arranged, in the direction of the machine axis, at regular intervals, and magnetic poles of permanent magnets of the linear actuator are arranged, in the direction of the machine axis, at the same regular intervals, except for at least one pair of neighboring or adjacent stator windings or at least one pair of permanent magnets which are arranged with a larger interval, in particular with one and a half times the regular interval. This interval can be called a cogging compensation interval $\Delta z$. This interval $\Delta z$ can divide the windings into two groups, each constituting a balanced n-phase system (with n=2 or more), each driven by separate inverters.

In embodiments, the magnetic poles of permanent magnets of the linear actuator are arranged at regular intervals *zr,* and the stator windings are arranged in at least two groups at regular intervals *zw,* the groups being offset to one another by the cogging compensation interval $\Delta z$. The cogging compensation interval $\Delta z$ is not an integer multiple of the regular interval *zw,* and typically is equal to $zw*(n+0.5)$ with n being an integer, preferably one. The way $\Delta z$ alleviates cogging force (in axial direction) is analogous to how $\Delta\varphi_{cog}$ alleviates the cogging torque. A particular ML-DS machine design can have both of them, one of them, or none of them.

In embodiments, the outer stator and outer coils are part of the linear actuator section and the inner stator and inner coils are part of the rotary actuator section. In other words, an outer machine constitutes the linear actuator, and inner machines constitute the rotary actuators.

In embodiments, the outer stator and outer coils are part of the rotary actuator section the inner stator and inner coils are part of the tubular linear actuator. In other words, outer machines constitute the rotary actuators, and an inner machine constitutes the linear actuator.

In embodiments, permanent magnets of at least one of the rotary actuators are arranged to form a Halbach cylinder.

In embodiments, permanent magnets of the tubular linear actuator are arranged to form a Halbach array.

According to a **second aspect** of the invention, there is provided a **tubular linear actuator** which comprises active magnetic bearings.

In more detail, the tubular linear actuator can comprise a stator and a mover, the mover being arranged to move, with a translational movement, in a direction of a longitudinal axis of the stator, the stator comprising a plurality of **stator windings** for driving this movement of the mover. Typically, the stator comprises one or more iron elements. Therein, the stator windings are arranged

- at three or more circumferential positions around an inner circumference of the stator for generating radial forces on the mover; thereby implementing an integrated magnetic bearing of the mover relative to the stator

- at three or more axial positions along the longitudinal axis of the stator, for generating longitudinal forces on the mover, for driving the mover in a direction of the longitudinal axis of the stator.

Thus, each stator winding (or coil) covers a part or subsection of the stator in the axial direction and a part or subsection in the circumferential direction. By this, it is possible to generate travelling magnetic fields in the longitudinal direction and at the same time generate magnetic fields that levitate the mover and control its radial position relative to the stator.

As a result there is provided a tubular linear actuator (TLA) with integrated MBs, leading to a so-called self-bearing (or bearingless) TLA. The resulting magnetically levitated tubular actuator (MALTA) allows for higher compactness and better utilization of the electro-magnetic materials, since they are used both for driving the actuator and suspending its mover.

In embodiments, the stator windings comprise a **first set of windings,** these windings being arranged at three or more circumferential positions and at three or more axial positions, wherein windings that are at the same circumferential position and at different axial positions (adjacent to or neighboring one another) constitute a **winding group,** and in each winding group the windings are arranged to form a multiphase, in particular a three phase configuration.

The number of phases in each winding group is the number of phases used for driving the mover (in the axial direction). The number of winding groups is the number of phases for generating the radial bearing forces, i.e. for implementing the magnetic bearing. When referring to "windings that are at the same circumferential position", this also encompasses sets of windings (for example, winding pairs), wherin for each member of one such set there is one member of the other set that is at the same circumferential position (For example, for several winding pairs, each with a first and a second winding, the first windings of each pair are at the same first circumferential position, and the second windings of each pair are at the same second circumferential position. So the winding pairs are said to be at the same circumferential position). The number of such sets is the number of phases for generating the radial bearing forces. This number can be two or three or more. Typically, the windings of such a set are powered together. This means that they are connected in a manner that their currents depend on one another. For example, they are connected in a series or parallel arrangement. This allows to drive and control the windings of such a set together, by the same power source. This power source can be an inverter.

In embodiments, the windings of a winding group are arranged in a star configuration. This typically is a symmetric star configuration.

In embodiments, the first set of windings constitutes a set of **combined** windings for generating both the radial forces for the magnetic bearing and for driving the mover.

This allows to reduce the number of inverter switches that can be connected to the actuator for driving corresponding bearing and driving currents. But on the other hand, a voltage for driving these bearing and driving currents is the same, which entails other inefficiencies.

In embodiments, the first set of windings constitutes a set of **bearing windings** for implementing the magnetic bearing, and the tubular linear actuator comprises a second, **separate** set of **drive windings** $L_1$, $L_2$, $L_3$ for driving the mover.

This allows to have separate voltages for driving the bearing and driving currents. On the other hand, the total number of inverter switches when there is a single independently controllable bearing module is higher than for a combined winding. But for two or more independently controllable bearing modules in combination with a single drive module, the number of switches increases less than if a complete combined module is duplicated. An optimal choice of winding topology and thus also inverter topology depends on the application.

In embodiments, the tubular linear actuator comprises an **inverter** configured to power the stator windings to generate the radial forces on the mover. This inverter can be used, depending on the control scheme, to generate only bearing forces, or to generate both bearing and driving forces.

In embodiments, the inverter is a **combined** inverter configured to power the first set of windings to generate both the radial forces on the mover and to drive the mover in a direction of the longitudinal axis of the stator.

In embodiments, the combined inverter is configured to generate a **superposition** of bearing currents and drive currents in the first set of windings, the bearing currents giving rise to radial forces for levitating the mover, and the drive currents giving rise to driving forces for driving the mover in a direction of the longitudinal axis of the stator.

In embodiments, the inverter is a bearing inverter configured to power the first set of windings to generate (only) the radial forces on the mover, and the tubular linear actuator comprises a **separate** drive inverter arranged to power the separate set of drive windings for driving the mover. This corresponds to there being two separate sets of windings for generating bearing and driving forces.

In embodiments, the tubular linear actuator comprises at least two winding **modules,** each winding module comprising a set of stator windings for generating radial forces at different axial positions independent from the others. In other words, each winding module implements an independent magnetic bearing at a different location on the axis of the actuator. As these can controlled separately, tilting of the mover can be controlled.

The winding modules can comprise (a) separate bearing windings, that is one set of separate bearing windings for each winding module, and a common or shared set of drive windings. Alternatively (b) the winding modules can comprise separate combined windings, that is, one set of combined windings for each winding module. As a further alternative (c), the winding modules can comprise separate bearing windings and also separately controllable drive windings.

Depending on the variant, the winding modules can be (for c) controlled separately with regard to both the bearing and the drive forces, or (for a, b) the drive currents and forces can be controlled by a single controller for both modules, with only the bearing currents and forces being controlled independently. In the latter case,

- as in (a), the set of all bearing windings can be partitioned to form at least two separate bearing winding modules with associated separate bearing inverters, and the drive windings form a single set, separate from the bearing windings, and controlled by a single associated drive inverter.
- or, as in (b), there can be least two modules of combined windings powered by associated combined inverters; a separate one for each module. A single drive controller can determine drive currents and input them to the separate controllers of the separate combined inverters for superposition with the respective bearing currents.

In embodiments, the tubular linear actuator comprises mover permanent magnets that extend around the mover in the circumferential direction, and comprises elements, that form a circumferential gap. This means that the elements, when considered in the circumferential direction, constitute a gap. The elements extend in the axial direction. The elements reduce the magnetic field in the region of the gap. These elements can be circumferential gaps or circumferential slits in the mover permanent magnets, the gaps or slits running in the axial direction.

In other words, the mover permanent magnets exhibit, for the same axial position, essentially the same magnetic polarity but comprise sections in which the magnetic field is reduced. Thus the elements such as slits introduce interruptions of the permanent magnet's extension in the circumferential direction. Doing so, a magnetic saliency in the circumferential direction is introduced, which leads to a cogging torque $T\text{cog}$. If the mover is rotated away from a nominal rotational position, the cogging torque $T\text{cog}$ turns it back to this nominal position.

In embodiments, the tubular linear actuator comprises at least one set of null-flux coils arranged on the stator, the null-flux coils of the at least one set being arranged such that their total flux linkage changes in the event of rotational movement of the mover (relative to the stator), but does not change in the event of linear movement of the mover (relative to the stator).

The null-flux coils can be short-circuited or can comprise resistance elements (in addition to the inherent resistance of the null-flux coils themselves) for dissipating power.

In embodiments, the stator comprises eddy current damping elements comprising electrical conductors that extend in the axial direction of the stator. In, particular the electrical conductors can be solid blocks of electrically conductive material or they are implemented as damping coils. By being solid blocks, they can be structurally different from the stator.

The damping elements can be bodies with high electrical conductivity, in particular having a conductivity that is five times higher than that of the material of the stator. Typically, the mover comprises permanent magnets, arranged to interact with the stator winding for driving and levitating the mover.

Generally, the invention according to the second aspect can be realised with the stator being tubular, surrounding the mover in the circumferential direction, or the mover can be tubular, surrounding the stator.

The invention can be implemented using concentrated windings in slotted machines, or using and air gap windings in slotless machines.

In embodiments, the movers comprise permanent magnets in Halbach arrangements.

In embodiments, the MALTA permanent magnets are radially magnetized, with magnetization polarities alternating in the z-direction (which is standard in tubular linear drives): e.g. the first magnet ring is magnetized radially outwards, the second radially inwards, and so on.

In embodiments, magnet rings can be magnetized in the axial direction (thus not radially), in alternating directions. It is then preferred to insert an iron ring between the magnets, resulting in the mover comprising: a first magnet ring magnetized in a first (positive) axial direction, preferably a ring made of iron, a second magnet ring, magnetized in a second (negative, opposite direction to the first one), another ring made of iron, and so on.

According to a **combination of the two aspects** of the invention, the **tubular linear actuator** according to the second aspect is part of a **linear-rotary actuator** according to the first aspect.

In other words, according to this combination, the linear actuator section of the **linear-rotary actuator** is implemented by a **tubular linear actuator** with active magnetic bearings according to the second aspect.

Further embodiments are evident from the dependent patent claims.

## EXEMPLARY EMBODIMENTS

The invention is explained in more detail below with the aid of exemplary embodiments, which are illustrated in the appended figures. These show:

**Fig. 1:**     a prior art linear-rotary actuator (LiRA) with two stators in 3D illustrations and 2D cross sections;

**Fig. 2:** linear actuator and rotary actuator force and torque generation. The illustrated forces acting on the stator teeth are purely electromagnetic forces (cogging force/torque is excluded). (a) Axial forces generated by 3-phase currents in linear actuator coils. (b) Torque generation of the rotary actuator. (c) Bearing force generation of the rotary actuator. (d) Simultaneous generation of torque and bearing force;

**Fig. 3:** tilting control of the mover;

**Fig. 4:** (a) passive cogging torque compensation. (b) Cogging torque waveforms that illustrate a cogging torque compensation feature; and

**Fig. 5:** axial displacement of the two modules of the outer linear actuator such that drive cogging force is minimized.

**Fig. 6:** Evolution of a self-bearing (bearingless) flat linear actuator from a self-bearing rotational actuator, and forming of a state of the art tubular linear actuator (without magnetic bearings) from the flat linear actuator

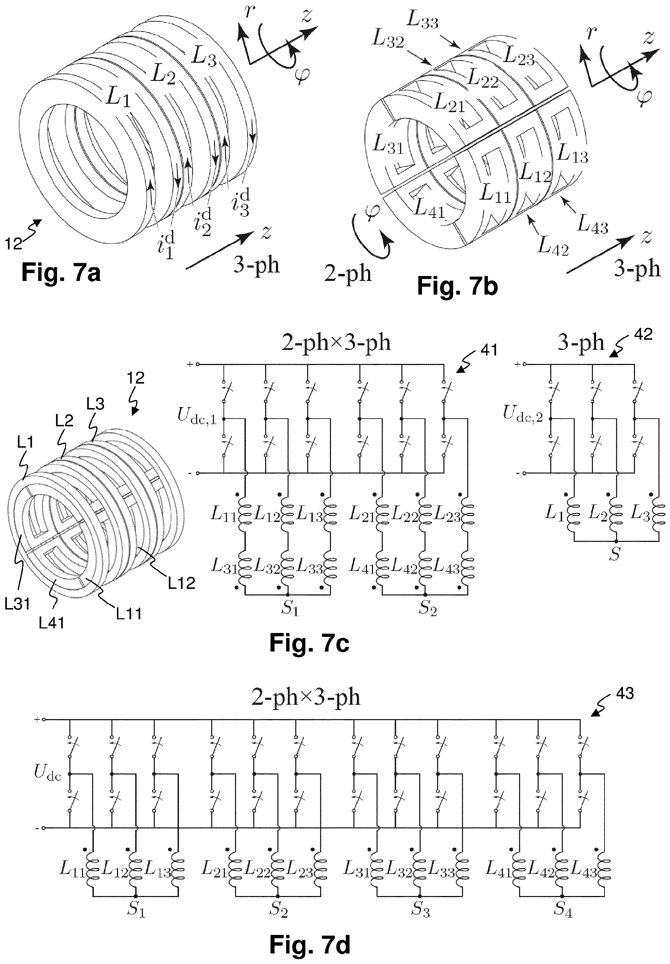

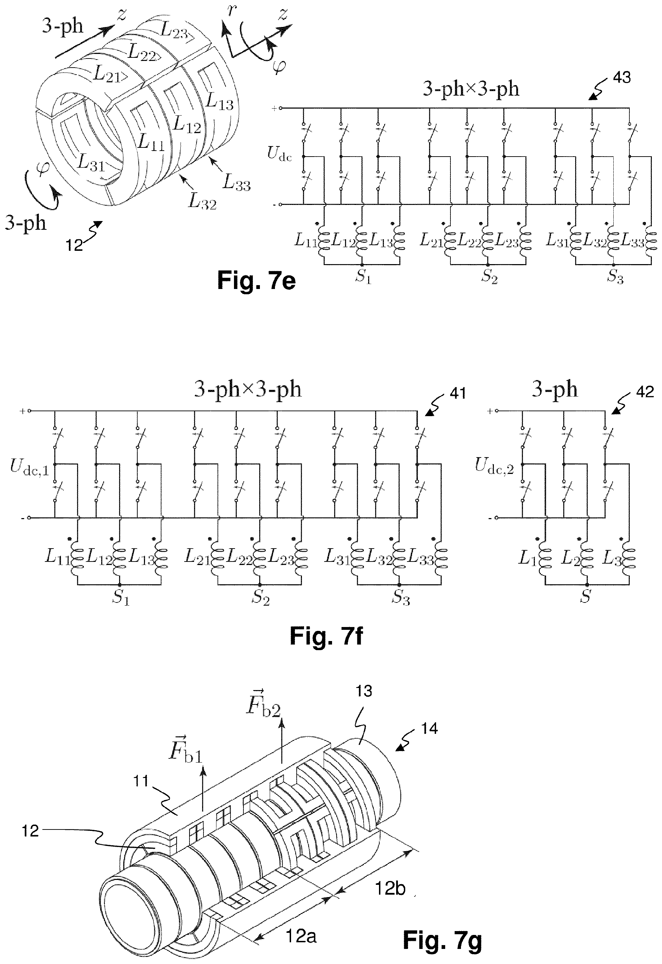

**Fig. 7:** (a) Three-phase tubular linear actuator (TLA) drive windings (state of the art), (b) windings for a MALTA with two phases in the circumferential direction and three phases in the axial direction, (c) arrangement of separate drive and bearing windings in order to achieve self-bearing operation with a MALTA featuring two phases in circumferential and three phases in axial direction, and respective inverters, (d) inverter topology for combined windings of a MALTA featuring two phases in circumferential and three phases in axial direction, (e) combined windings and the respective inverter for a MALTA with 3-phases in both circumferential and axial directions, (f) inverter for a MALTA with separated windings featuring 3-phases in both circumferential and axial directions, (g) MALTA arrangement with two modules in order to have bearing forces $\vec{F}_{b1}$ and $\vec{F}_{b2}$ acting on the mover at two separate axial positions.

**Fig. 8:** Introduction of slits in the rotor, for creating a cogging torque that can be utilized to stabilize the mover's circumferential position.

**Fig. 9:** MALTA with null-flux coils for providing damping of the circumferential motion of the mover.

**Fig. 10:** MALTA with null-flux coils for providing damping of the circumferential motion of the mover.

**Fig. 11:** MALTA with parts with high electrical conductivity in the stator for providing damping of the circumferential motion of the mover.

**Fig. 12:** Different options for the placement of the solid parts with high electrical conductivity in the stator for providing damping of the circumferential motion of the mover.

In principle, identical or functionally identical parts are provided with the same reference symbols in the figures.

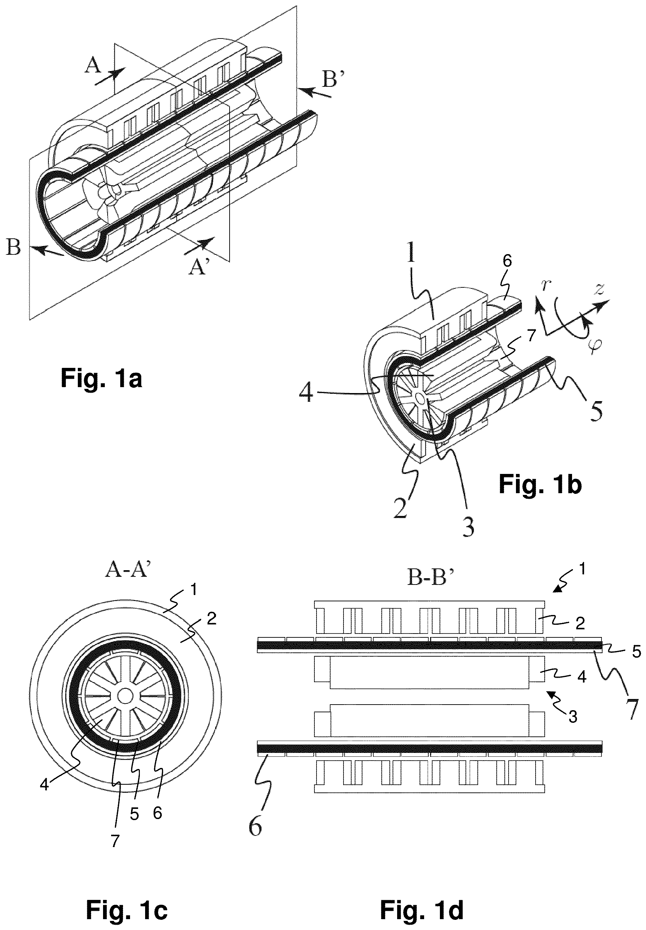

A state-of-the-art linear-rotary actuator (LiRA) with two radially displaced, coaxial stators, is shown in **Fig. 1,** with in **Fig. 1a** an overall view, in **Fig. 1b** a partial view, in **Fig. 1c** a transverse sectional view and in **Fig. 1c** a longitudinal sectional view. A linear actuator (outer) stator 1 with linear actuator (outer) coils 2 radially surrounds a mover which in turn radially surrounds an rotary actuator (inner) stator 3 with rotary actuator (inner) coils 4. The mover can move (translationally) in the direction of a machine axis and rotate around the machine axis. The mover comprises a mover core 5 with rotary actuator (inner) permanent magnets 7 and linear actuator (outer) permanent magnets 6.

The rotary actuator (inner) permanent magnets 7 are arranged to interact with the rotary actuator (inner) coils 4, thereby forming a rotary actuator. The rotary actuator (inner) permanent magnets 7 extend along the direction of the machine axis.

The linear actuator (outer) permanent magnets 6 are arranged to interact with the linear actuator (outer) coils 2, thereby forming a linear actuator. The linear actuator (outer) permanent magnets 6 extend in a circumferential direction around the machine axis.

The outer stator 1 and the inner stator 3 are attached to one another by an overall stator construction (omitted for clarity).

This arrangement, in which one stator belongs to rotary actuator (RA) and the other one to the linear actuator (LA), is used as a starting point for magnetic bearing (MB) integration. In order to integrate the magnetic bearings into this LiRA actuator, non trivial modifications of its geometry are necessary such that contactless support of the mover with magnetic bearings is possible. Both actuators, rotary actuator and linear actuator, have their own sets of permanent magnets (PMs) that are mounted on the same cylindrical core, forming the mover of the overall LiRA

In order to achieve a self-bearing drive, i.e. magnetically levitate the mover of the shown LiRA without using additional, stand-alone magnetic bearings; air gap magnetic field distribution in the circumferential direction should be controlled. Since the currents flowing in the windings of the linear actuator can only alter the field in the axial direction, the rotary actuator is used for the integration of magnetic bearings into this LiRA. In other words, the torque $\vec{T}$ and the bearing force $\vec{F}_b$ are generated with the rotary actuator, and axial (thrust) force $\vec{F}_z$ with the linear actuator.

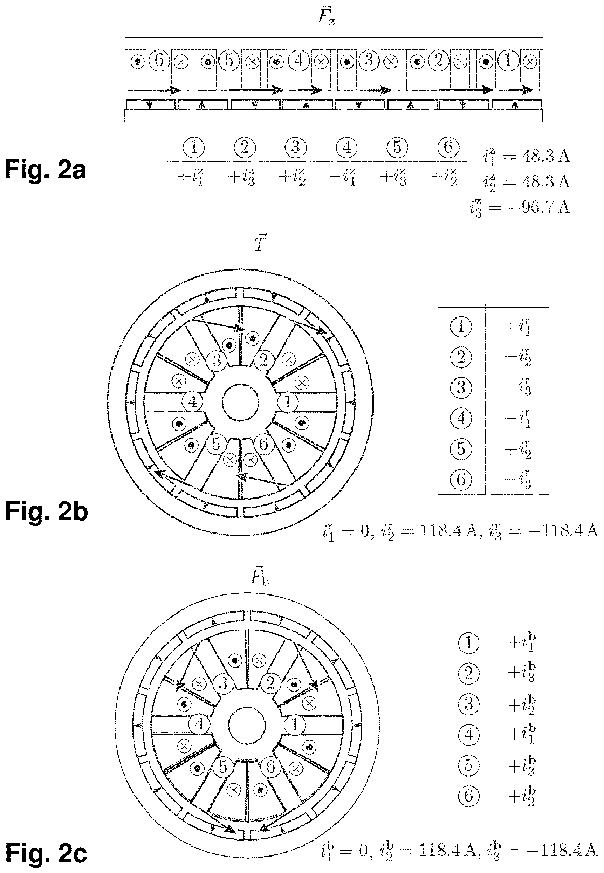

Figures **2a-2d** show currents and forces generated in the linear and rotary actuators. In each case, coils are labelled with circled numbers, and in windings associated with the coils the direction of the current is indicated, and a table shows, for each coil, an associated current.

Axial forces generated by the currents in each linear actuator coil are shown in Fig. 2a for a given mover position.

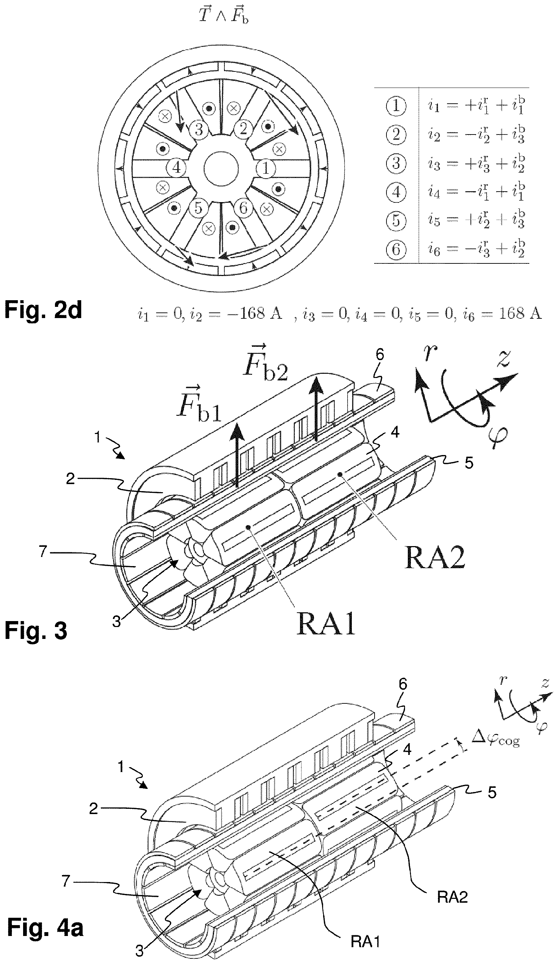

The generation of torque and bearing force is depicted in **Fig. 2b-2d**. The interaction of the field generated by a 3-phase drive winding with $p_r$ pole pairs with permanent magnet field also with $p_r$ pole pairs results in the forces depicted in **Fig. 2b,** which in turn results in a drive torque $\vec{T}$. At the same rotor position, a different set of winding currents with $p_r$- 1 pole pairs generates force components depicted in **Fig. 2c,** which add up to a bearing force rather than a torque. **Fig. 2d** shows the case where both bearing force and torque are generated simultaneously. For a simultaneous and decoupled torque and bearing force control, superposition of the 3-phase torque and bearing currents (with $p_r$ and $p_r$ - 1 pole pairs) is needed, which can be achieved by a 6-phase inverter comprising at least 12 switches. Controlling such combined windings of a rotary actuator with a combined inverter to provide both torque (driving) forces and radial (bearing or levitating) forces is known from the prior art.

However, generating a bearing force $\vec{F}_b$ is not enough to magnetically levitate a long mover, as tilting with respect to z-axis also should be controlled. Therefore, the inner rotary actuator is split into two independent rotary actuators: RA1 and RA2 as indicated in **Fig. 3**. With this arrangement, active control of the tilting can be accomplished with two radial forces $\vec{F}_{b1}$ and $\vec{F}_{b2}$. The rotary actuators RA1 and RA2 are powered separately, thus, the number of switches in the inverter for the inner actuator is doubled, $2 \times 12 = 24$ switches. The minimum number of switches for the whole LiRA drive is 6(LA) + 24(RA1,RA2) = 30 switches. The rotary actuators RA1 and RA2 can be controlled separately so as to keep the mover core 5 aligned between the two stators.

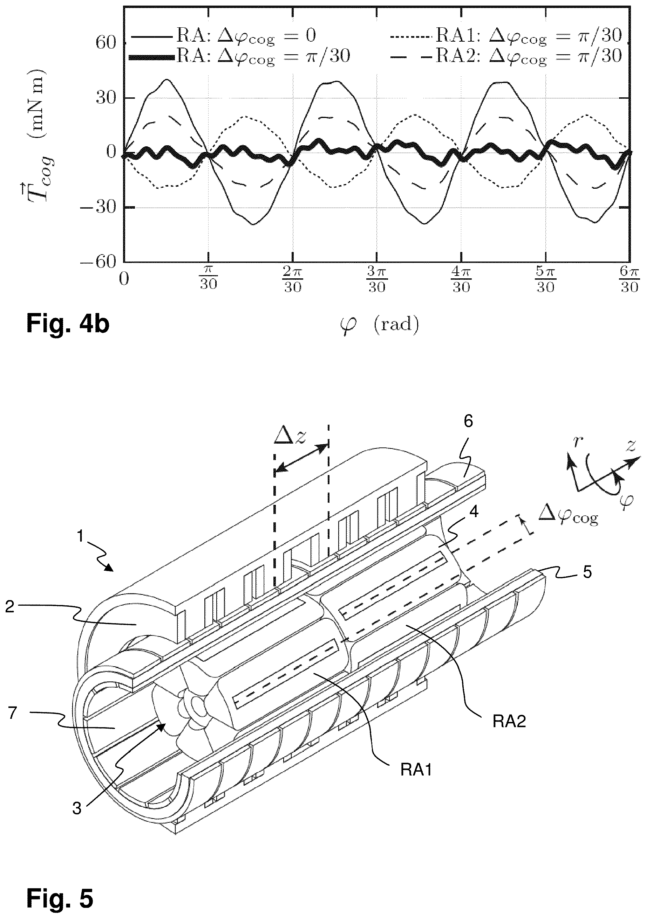

Another possible aspect in the proposed self-bearing LiRA concept is passive cogging torque minimization. (Cogging or Detent torque in a permanent-magnet electrical machine is the torque created by the magnetic interaction of the permanent-magnet field and the stator teeth. It is an unwanted effect, characterized by an additional oscillating torque profile added on top of the ideally constant electromagnetic torque). In the embodiment of **Fig. 4a,** the rotary actuators RA1 and RA2 are skewed in circumferential direction with respect to each other by a cogging compensation angle $\Delta\varphi_{cog}$, such that the sum of their cogging torques is minimized. **Fig. 4b** shows cogging torque waveforms of the rotary actuators RA1 and RA2 and the summation of these two cogging torques, which is the total cogging torque acting on the mover. The total cogging torque acting on the mover is shown for two cases. In the first case, there is no skewing of the RA1 and RA2 (plot denoted with RA: $\Delta\varphi_{cog}$=0), and the cogging torques of the RA1 and RA2 add up such that they increase the total cogging torque acting on the mover. In the second case, RA1 and RA2 are skewed with a cogging compensation angle of $\Delta\varphi_{cog}$=π/30, such that their cogging torques (plots denoted with RA1: $\Delta\varphi_{cog}$=π/30 and RA2: $\Delta\varphi_{cog}$=π/30) are phase shifted such that their sum, which is the total cogging torque acting on the mover (plot denoted with RA: $\Delta\varphi_{cog}$=π/30) is minimized. The horizontal axis of **Fig. 4b** shows the rotational position of the mover in radians.

Since the rotary actuators RA1 and RA2 have separate inverters, maximum-torque-per-ampere operation can be ensured in both actuators, thus, the skewing reduces neither the electromagnetic torque nor the bearing force. The risk of this stator skewing exciting rotor nutation is minimized by choosing a pole/slot combination that leads to no radial pull (e.g. 10/6).

In the embodiments presented so far, the rotary actuators RA1 and RA2 are shown to have combined windings to provide both torque forces and radial forces. In other embodiments, one or both of the rotary actuators RA1 and RA2 can have separate drive and bearing windings.

Similarly to skewing RA1 and RA2, two modules of the outer linear actuator can be axially displaced such that linear drive cogging force is minimized. This displacement is by an axial displacement distance $\Delta z$ (or cogging compensation interval) is illustrated in **Fig. 5.**

The inside (rotary actuator) and outside (linear actuator) actuators can be interchanged, that is, with the rotary actuator placed outside and the linear actuator placed inside, keeping all the operational principles the same.

The permanent magnets of the rotary and/or of the linear machines can be realized with a Halbach arrangement. This increases the power density and reduces the required thickness of the mover iron. If both magnet sets are in a Halbach arrangement, the iron in the mover can be removed or replaced by a non-magnetic structure.

**Fig. 6** shows the evolution of a self-bearing (bearingless) flat linear actuator from a self-bearing rotational actuator through unfolding in a first circumferential direction. This is shown in a first step. In a second step, a state of-the-art tubular linear actuator is shown as being generated by folding this flat linear actuator in a second circumferential direction orthogonal to the first. To the left of **Fig. 6** the two steps are shown, to the right corresponding cross sections at each stage are shown.

Sectional view A-A' shows a stator 11 with stator windings 12, separated by an air gap 15 from a rotor, which in general terms can be called a mover 14. The mover 14 comprises a mover core 5 and rotor permanent magnet sections 31, 32. A first rotor permanent magnet section 31 acts, at its outer side opposing the stator 11, as a magnetic pole (e.g. south pole), and the second rotor permanent magnet section 32 acts at its outer side as the opposite magnetic pole (e.g. north pole). This behaviour can be realized with various arrangements of magnets known to the skilled person. The interaction of a current in the stator windings 12 and the rotor permanent magnets generates a torque $T$ and/or bearing force $F_b$.

Sectional view B-B' shows the unfolded machine. The transformation turns the rotor permanent magnets into linear actuator permanent magnets 310, 320, with alternating magnetic poles of the mover 14 opposing the flat stator 11.

Sectional view C-C' shows the machine rolled up in the other direction. The transformation turns the permanent magnets of the mover 14 into mover permanent magnets 13, in the shape of rings, with magnetic poles alternating in the longitudinal direction of the machine. At a particular longitudinal position, the magnetisation of the mover permanent magnets 13 remains the same regardless of the circumferential position on the mover 14.

Thus, the mover 14 comprises a mover core 5 and mover permanent magnets 13. The stator coils 12 can be powered to drive the mover 14 in a direction of the longitudinal axis of the machine (which is the common longitudinal axis of the stator 11 and the mover 14). The resulting linear actuator is called "tubular" since the stator 11 forms a tube or hollow cylinder surrounding the mover 14. The mover 14 itself can also be tubular, but need not necessarily be so.

Here and in the other examples, the stator 11 is shown to surround the mover 14. However, the invention can also be implemented with the mover 14 being of a tubular shape and surrounding the stator 11. Furthermore, the terms "mover" and "stator" are chosen for convenience: depending on the application and the frame of reference, the mover 14 can be in a fixed position, and the stator 11 can move relative to the mover 14.

This illustrates the incapability of the state-of-the-art tubular linear actuator of self-bearing operation, because the total resulting magnetic bearing force $\vec{F}_b$ is zero.

In **Fig. 7a,** windings of a state-of-the-art, three-phase tubular linear actuators are illustrated. Generation of a drive force $\vec{F}_d$ requires windings $L_1, L_2, L_3,$ to carry corresponding three-phase currents of the following form

$$i_k^{\mathrm{d}}(t) = I_{\mathrm{m}}^{\mathrm{d}} \cos\left(\theta_{\mathrm{d}}(t) + (k-1)2\pi/3\right), \qquad (1)$$

where $\theta_d(t)$ is the mover's electrical axial position at time $t$ and $k \in \{1,2,3\}$ denotes the phase.

However, this winding arrangement does not allow magnetic suspension of the mover 14, since it cannot be used to change the flux density in the air gap in circumferential direction. Therefore, in order integrate magnetic bearings into a state-of-the-art tubular linear actuators and achieve a self-bearing operation, a major rearrangement of the windings is required. This new winding arrangement can be realized in several different ways, some of which will be shown in the following, as long as it can create a controlled change of the air gap field in the circumferential direction.

Both in the circumferential and in axial directions, more than one coil (also called winding), grouped in more than one phase is required. The number of phases in the circumferential direction needs to be higher than one, in order to be able to generate a bearing force whose angle can be adjusted such that the mover can be pulled magnetically towards any circumferential angle. The number of phases in the axial direction needs to be more than one, such that a bearing force with a constant amplitude can be applied at any given axial position of the mover.

The winding layout shown in **Fig. 7b** is one possible realization of such a winding. In this arrangement, four coils are arranged in the circumferential direction at different positions and three coils are arranged in the axial direction at different positions, resulting in a total of twelve coils. This arrangement can be repeated in the axial direction, depending on the length of the actuator. The coils opposite of each other in the circumferential direction are connected in anti-series, and these coil pairs are then connected as shown in **Fig. 7c** (middle). Coil pairs at the same circumferential positions form a three-phase system, since the axial drive actuator uses three phases. In the present examples, three phase systems in a star configuration are shown, with star points $S_1$, $S_2$, etc. For each phase in the circumferential direction (for the bearing), there is a corresponding winding group: the first winding group corresponding to the first phase comprises the winding pairs $L_{11} + L_{31}$, $L_{12} + L_{32}$, $L_{13} + L_{33}$ and the second winding group for the second phase comprises the winding pairs $L_{21} + L_{41}$, $L_{22} + L_{42}$, $L_{23} + L_{43}$. The windings of, for example, the first winding group are said to be at the same circumferential position, because $L_{11}, L_{12}, L_{13}$ are at the same (first) circumferential position and $L_{31},$

$L_{32}$, $L_{33}$ are at the same (second) circumferential position. The resulting arrangement can generate a bearing force $\vec{F}_b$ with a controllable angle and magnitude, for any given axial position of the mover. For example, this can be done with the currents flowing in these windings being of the form

$$i^b_{1k}(t) = I_m^b \cos(\varphi)\cos(\theta_d(t) + (k - 1)2\pi/3 + \pi/2),$$

$$\text{(2)}$$

$$i^b_{2k}(t) = I_m^b \sin(\varphi)\cos(\theta_d(t) + (k - 1)2\pi/3 + \pi/2),$$

$$i^b_{3k}(t) = -i^b_{1k}(t), \quad i^b_{4k}(t) = -i^b_{2k}(t),$$

and where $\varphi$ is the radial angle of $\vec{F}_b$. Indices $k \in \{1,2,3\}$ indicating the axial position of a coil $L_{jk}$ and $j \in \{1,2,3,4\}$ indicating the circumferential position of the coil relate the currents to their coils, i.e. the current $i_{jk}$ flows in the coil $L_{jk}$ in **Fig. 7b**.

The above-mentioned exemplary arrangement can be considered as a winding featuring two phases in the circumferential direction and three phases in the axial direction, and a corresponding abbreviated notation "2-phase x 3-phase" will be used in the following to describe further arrangements of the coils.

However, a drive force $\vec{F}_d$ cannot be generated using this arrangement. Therefore, in **Fig. 7c** (left), a separate set of drive windings $L_1$, $L_2$, $L_3$, (as known from the state-of-the-art TLA) are used together with the bearing windings $L_{jk}$. The drive windings require their dedicated drive inverter 42 for operation, as in the case in state-of-the-art TLAs, as shown in **Fig. 7c** (right). The resulting complete winding arrangement comprises dedicated and separate drive and bearing windings, thus, will henceforth be called *separated* winding arrangement.

Only two-level inverters are chosen as an example, for showing the minimum number of semiconductor switches required. For driving the bearing windings, the bearing inverter 41 topology (**Fig. 7c,** center) has 12 switches, while 6 switches are required for the drive inverter 42 powering the drive windings (**Fig. 7c,** right). A first DC link voltage $U_{dc,1}$ for powering the bearing windings can be lower than a second DC link voltage $U_{dc,2}$ for powering the drive windings as the total back-emf due to the linear motion is not seen by the inverter that drives the bearing windings, because of the anti-series connection of the bearing coils.

The bearing windings are shown, for the sake of simplicity, as being concentrated (non-overlapping) coils . For the drive windings, on the other hand, the lack of end windings makes it possible to also consider integer slot windings.

In the machine described above, in each slot (that is, in empty spaces between the stator teeth), drive and bearing currents flow in their respective windings. Essentially, the operation of the machine is defined by the total currents in the slots, which are the sum of drive and bearing currents in the respective slots. Therefore, it becomes clear that one can also use only a single set of windings, which can generate both magnetic bearing forces and drive forces, given that a superposition of correct bearing and drive currents flows in the correct slots. This means that, as an alternative to the *separated* winding arrangement, self-bearing operation can be also achieved with a single set of windings that combine the magnetic bearing and drive winding functionality, which will henceforth be called *combined* windings.

For example, self-bearing operation can be achieved with the windings shown in **Fig. 7b,** when they are arranged with a circuit topology according to **Fig. 7d.** Generally speaking, this means that windings at different axial positions and at the same circumferential position form a multiphase system according to the number of phases applied to the axial drive. Typically, this is a three-phase system, if the axial drive actuator uses three phases. In the present examples, three phase systems in a star configuration are shown, with star points $S_1$, $S_2$, etc. For each phase in the circumferential direction, there is a corresponding winding group: the winding group corresponding to the first phase comprises the windings $L_{11}$, $L_{12}$, $L_{13}$; the one for the second phase $L_{21}$, $L_{22}$, $L_{23}$; etc.

Again, of course, this arrangement can be repeated in the axial direction, depending on the desired length of the actuator.

The windings can be arranged to be driven by a combined inverter 43 and carry a superposition of bearing and drive currents $i_{jk}(t) = i^d_{jk}(t) + i^b_{jk}(t),$ where $j \in \{1,2,3,4\}$ and $k \in \{1,2,3\}$; $i^d_{jk}(t)$ and $i_{jk}^b(t)$ are given by Eqs. (1) and (2), respectively. Each one of the separate three-phase systems is powered by a three phase subset of inverter bridges of the combined inverter 43.

Since a series connection of the coils is not possible here (in contrast to the *separated* windings), the total minimum number of switches in the inverter is increased to 24 and the use of a lower DC link voltage for the bearing windings is not anymore possible.

A combined winding arrangement can also be achieved with a winding featuring three phases in both circumferential and axial directions, as shown in **Fig. 7e** (left). The topology of the windings, shown in **Fig. 7e** (right), is again such that windings at different axial positions and at the same circumferential position form a three-phase system. And again each one of the separate three-phase systems is powered by a three phase subset of inverter bridges of the combined inverter 43.

As the three-phase arrangement in the axial direction is the same as in the previous example, the driving current component $i^d_{\{1,2,3\}}(t)$ is given by (1). The bearing current is

$$i^b_{jk}(t) = I_m^b \cos(\varphi + (j-1)2\pi/3) \times \cos(\theta_d(t) + (k-1)2\pi/3 + \pi/2), \qquad (3)$$

where $j \in \{1,2,3\}$, $k \in \{1,2,3\}$ and $\varphi$ is the radial angle of $\vec{F}_b$. Again, the windings can be driven to carry a superposition of bearing and drive currents, here as given by Eqs. (1) and (3).

The winding arrangement and the topology of their electrical connection shown in **Fig. 7e** can also be utilized as the bearing winding of a *separated* winding arrangement, according to **Fig. 7f** (left), with a corresponding bearing inverter 41.

Similar to what has been described above, an additional drive winding with its respective inverter 42 is then needed as shown in **Fig. 7f** (right). Again, the bearing inverter and the drive inverter can be powered with different DC link voltages $U_{dc,1}$, $U_{dc,2}$.

In **Fig. 7a-f,** only a single winding module is considered. However, for controlling a tilting of the mover's longitudinal axis, at least two of such winding modules 12a, 12b can be present and can be controlled separately. A MALTA with two winding modules 12a, 12b is illustrated in **Fig. 7g,** where tilting of the mover 14 is controlled with two independent bearing forces $\vec{F}_{b1}$ and $\vec{F}_{b2}$

In terms of winding layouts, four more combinations are possible with two-phase drive windings (windings featuring two phases in the axial direction). The minimum number of switches in their respective inverters are given in Table 1. The first column indicates the number of phases in the circumferential direction followed by the number of phases in the axial direction.

Further winding arrangements with different number of phases both in circumferential and axial directions can be derived by persons skilled in art based on the above description.

**Table 1:** Number of switches in the inverter for different windings layouts.

| Windings layout | 1 module | 2 modules | 3 modules |
|---|---|---|---|
| **Separated windings** | | | |
| 2-phase×2-phase | 24(switches) | 40(switches) | 56(switches) |
| 3-phase×2-phase | 20(switches) | 32(switches) | 44(switches) |
| 2-phase×3-phase | 18(switches) | 30(switches) | 42(switches) |
| 3-phase×3-phase | 24(switches) | 42(switches) | 60(switches) |
| **Combined windings** | | | |
| 2-phase×2-phase | 32(switches) | 64(switches) | 96(switches) |
| 3-phase×2-phase | 12(switches) | 24(switches) | 36(switches) |
| 2-phase×3-phase | 24(switches) | 48(switches) | 72(switches) |
| 3-phase 3-phase | 18(switches) | 36(switches) | 54(switches) |

Furthermore, inverters with more than two levels and with other topologies can be combined with each of the different winding layouts.

The proposed MALTA concept cannot only be used to replace linear mechanical bearings, but can also be combined with them in order to reduce the wear and the size of the mechanical bearings and improve their lifetime and efficiency.

The embodiments shown so far can be realized either with a stator that contains teeth, or a toothless (more commonly called slotless) stator, which features a simple, hollow cylinder shape.

The embodiments shown so far feature permanent magnets that extend over the rotor circumferentially. For this reason, in cases where a parasitic torque applies on the mover during operation (e.g. by an unbalanced load), the mover of the MALTA can displace circumferentially (i.e. it can rotate around the axis of linear movement). Even though this has no fundamental effect on the machine's operation (since the rotor magnetic field does not vary in the circumferential direction), some applications may require a stable circumferential position during operation. Therefore, means for circumferential stabilization of the mover are shown in the following embodiments.

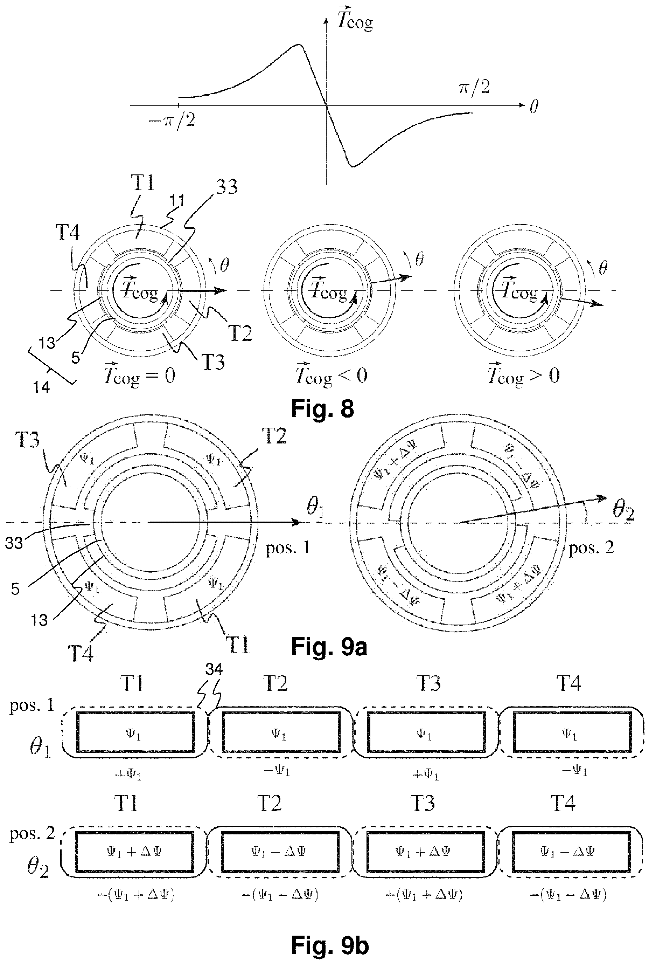

Considering MALTAs with slotted stators, a passive stabilization of the circumferential position of the mover can be achieved by introducing slits in the permanent magnets. The permanent magnets extend around the mover in the circumferential direction, and the slits extend in the axial direction. Thus the slits introduce interruptions of the permanent magnet's extension in the circumferential direction. Doing so, a magnetic saliency in the circumferential direction is introduced, which leads to a cogging Torque Tcog. This cogging torque brings the mover back to its preferred position in case it rotates away from it. In other words, a spring characteristic or elastic behaviour is achieved, countering the rotation of the mover. This is illustrated in **Fig. 8,** with the stator 11 having pole pieces or teeth T1, T2, T3, T4 and the mover 14 comprising permanent magnetic (incomplete) rings 13 with slits 33 in the axial direction. **Fig. 8** shows the mover 14 at three different rotational angles $\theta$, and the dependency of the cogging torque $T$cog on the angle $\theta$.

To avoid oscillations, this spring also needs to be damped. The rotation-induced losses in the stator yoke (i.e. core losses) provide such damping. However, in cases where this damping is not sufficient, additional damping can be achieved by means described below.

**Fig. 9a** depicts a cross sectional view of the machine, where, as in **Fig. 8,** axial slits 33 are introduced in the rotor magnets 13. Therefore, the flux in some of the teeth T1, T2, T3, T4 of the machine increases whereas the flux in some other teeth T1, T2, T3, T4 of the machine decreases by rotational movement. On the other hand, the flux in all the teeth increases or decreases simultaneously when linear movement takes place.

**Fig. 9b** shows the use of null-flux coils that take advantage of the above-mentioned flux change for generating additional damping. Null-flux coils are coils that are arranged in a way that their total flux linkage changes due to rotational movement, but does not change due to the linear movement. In other words, a voltage is induced in these coils due to rotation, but not due to linear movement. By short circuiting these coils, the induced voltage is forced to drive a current, causing power dissipation, which in effect dampens the rotational movement. **Fig. 9b** shows a null-flux coil 34 passing around the teeth T1, T2, T3, T4, and the flux in each of the teeth caused by the permanent magnet, depending on the angle $\theta$ of the mover, in two different positions (pos. 1 or pos. 2). In the target position ($\theta = \theta_1$, pos. 1) with the slits 33 aligned with gaps between the teeth the sum of the flux through the null flux coil is zero. At other positions ($\theta = \theta_2$, pos. 2), the sum of the flux is nonzero, in this case four times $\Delta\Psi$.

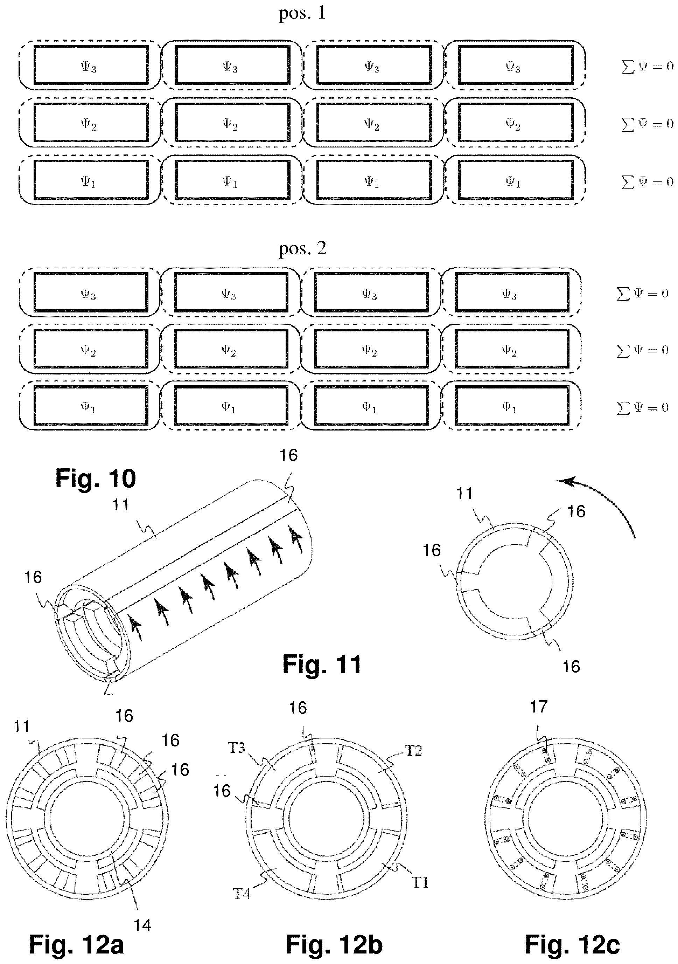

**Fig. 10** shows the null-flux coils for the complete MALTA with two phases in the circumferential direction and three phases in the axial direction.

Null-flux coil arrangements for MALTAs with different number of phases in axial and/or circumferential directions can be designed by persons skilled in art in a similar fashion. In each case, they are arranged such that linear movement does not induce a voltage, but rotation does.

Further means for generating additional damping, as an alternative to null-flux coils, is the placement of solid parts with high electrical conductivity in the stator, perpendicular to the direction of the flux change due to rotation. That is, these parts extend in the axial direction of the machine.

**Fig. 11** shows, in a perspective view (left) and a transverse section (right) the assembly of the MALTA where bodies with high electrical conductivity 16 are placed along the axial length of the stator, to provide a conductive path for eddy currents to flow when the mover rotates. The circumferential direction is indicated by arrows. The term "high electrical conductivity" is to be understood relative to the material of the other elements of the stator 11. For instance copper (approximately $6\times10^7$S/m) and aluminium (approximately $3.7\times10^7$S/m) can be considered to be materials with high electrical conductivity. Compared to a possible stator core material (structural steel with approximately $0.5\times10^7$S/m), they feature an electrical conductivity that is at least five times higher. Generally, the bodies with high electrical conductivity 16 can have a conductivity that is five times higher than that of the stator 11.

Generally, the bodies with high electrical conductivity 16 can be solid. Thereby they can be structurally different from the stator 11. For example, the stator can be laminated, or made of soft magnetic composite (iron powder with insulated granules, pressed together to form the final stator shape).

**Fig. 12a** and **Fig. 12b** show further options for the placement of bodies with high electrical conductivity 16 in the stator. **Fig. 12a** shows slots in the teeth of the stator 11, and axially extending bars of the high conductivity material 16 inserted in the slots. **Fig. 12b** shows axially extending bars of the high conductivity material 16 located at circumferential sides of the teeth T1, T2, T3, T4.

As an alternative to bodies with high electrical conductivity, electrical conductors forming coils 17 can be inserted in holes in the stator that run in the axial direction of the stator 11, in particular in the teeth T1, T2, T3, T4, as depicted for example in **Fig. 12c.**

The invention and exemplary embodiments have been described in terms of concentrated windings in slotted machines. However, the same principles apply for slotless machines and corresponding air gap windings.

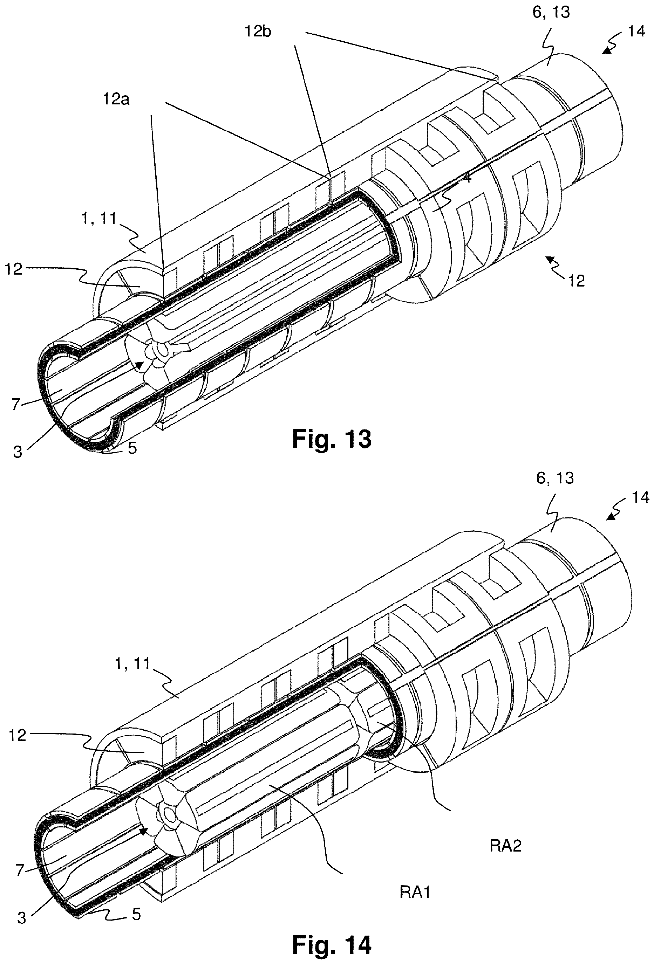

Figure 13 shows an example not belonging to the invention and figure 14 shows an embodiment belonging to the invention.

- **Figure 13** shows an *outer* **tubular linear actuator** (MALTA) with at least two winding modules 12a, 12b and one *inner* rotary actuator 3. This rotary actuator 3 can be implemented as a magnetic bearing. Tilting of the mover 14 can be controlled by the two winding modules 12a, 12b.

- **Figure 14** shows an *outer* **tubular linear actuator** (MALTA) with one or two winding modules and two *inner* rotary actuators RA1, RA2. These rotary actuators RA1, RA2 each implement a magnetic bearing. Tilting of the mover 14 can be controlled by these two magnetic bearings.

**Claims**

1. A linear-rotary actuator being an electrical machine comprising a **linear actuator section** (1, 2, 6; 11, 12, 13) and a **rotary actuator section** (3, 4, 7) arranged to drive a **mover** (14) to rotate around a **machine axis (z)** and to move along the machine axis, the **mover** (14) being of a tubular shape arranged between an outer stator (1) and an inner stator (3), wherein
   the linear actuator section (1, 2, 6; 11, 12, 13) is a tubular linear actuator,
   the tubular linear actuator comprising a stator (11) and the mover (14), the mover (14) being arranged to move in a direction of a longitudinal axis (z) of the stator (11), the stator (11) being the outer stator (1) or the inner stator(3) and comprising a plurality of stator windings (12) for driving this movement of the mover (14), wherein
   the rotary actuator section (3, 4, 7) comprises at least a first rotary actuator (RA1) comprising stator windings, **characterised in that** the first rotary actuator constitutes a magnetic bearing, the tubular linear actuator constitutes a magnetic bearing, the rotary actuator section (3, 4, 7) comprises a second rotary actuator (RA2), comprising stator windings and constituting a magnetic bearing, the first and second rotary actuator being arranged at separate locations along the machine axis (z), and that
   the stator windings (12, $L_1$, $L_2$, $L_3$, $L_{11}$, $L_{12}$, $L_{13}$, $L_{21}$, $L_{22}$, $L_{23}$, $L_{31}$, $L_{32}$, $L_{33}$, $L_{41}$, $L_{42}$, $L_{43}$) of the tubular linear actuator are arranged

   • at three or more circumferential positions for generating radial forces on the mover (14);
   • at three or more axial positions of the stator (11), for generating longitudinal forces on the mover (14).

2. The linear-rotary actuator of claim 1, wherein the stator windings of the first rotary actuator (RA1) and the stator windings of the second rotary actuator (RA2) are configured so that they can be powered separately.

3. The linear-rotary actuator of claim 1 or claim 2, comprising an electrical power supply that is arranged to power the rotary actuators separately.

4. The linear-rotary actuator of one of claims 1 through 3, wherein the stator windings at least one of the first rotary actuator (RA1) and the second rotary actuator (RA2) comprises **combined** windings to provide both torque forces and radial forces.

5. The linear-rotary actuator of one of claims 1 through 4, wherein the stator windings least one of the first rotary actuator (RA1) and the second rotary actuator (RA2) comprises **separate** windings to provide torque forces and radial forces.

6. The linear-rotary actuator of one of claims 1 through 5, wherein the stator windings and corresponding teeth of the first rotary actuator (RA1) are rotated around the machine axis, relative to the stator windings and corresponding poles of the second rotary actuator (RA2), by a **cogging compensation angle** ($\Delta\varphi_{cog}$).

7. The linear-rotary actuator of one of claims 1 through 6, wherein neighboring stator windings (2) and corresponding poles of the tubular linear actuator are arranged, in the direction of the machine axis (*z*), at regular intervals, and magnetic poles of permanent magnets (6) of the tubular linear actuator are arranged, in the direction of the machine axis (*z*), at the same regular intervals, except for at least one pair of neighboring stator windings of the tubular linear actuator or at least one pair of permanent magnets of the tubular linear actuator which are arranged with a larger interval ($\Delta z$), in particular with at least approximately one and a half times the regular interval.

8. The linear-rotary actuator of one of claims 1 through 7, wherein the **outer** stator (1) and outer coils (2), which are the stator windings of the tubular linear actuator, are part of the **linear** actuator section (1, 2, 6) and the **inner** stator (3) and inner coils (4), which are the stator windings of the first and second rotary actuator, are part of the **rotary** actuator section (3, 4, 7).

9. The linear-rotary actuator of one of claims 1 through 7, wherein the **outer** stator and outer coils, which are the stator windings of the first and second rotary actuator, are part of the **rotary** actuator section and the **inner** stator and inner coils, which are the stator windings of the tubular linear actuator, are part of the tubular **linear** actuator.

10. The linear-rotary actuator of one of claims 1 through 9, wherein permanent magnets (7) of at least one of the rotary actuators are arranged to form a **Halbach cylinder.**

11. The linear-rotary actuator of one of claims 1 through 10, wherein permanent magnets (6) of the tubular linear actuator are arranged to form a **Halbach array.**

12. The linear-rotary actuator of one of the preceding claims, wherein the linear actuator section (1, 2, 6; 11, 12, 13) comprises at least two winding modules (12a, 12b) for independently generating radial forces at different axial positions.

13. The linear-rotary actuator of one of the preceding claims, wherein the stator windings (12) of the tubular linear actuator comprise a **first set of windings** ($L_{11}$, $L_{12}$, $L_{13}$, $L_{21}$, $L_{22}$, $L_{23}$, $L_{31}$, $L_{32}$, $L_{33}$, $L_{41}$, $L_{42}$, $L_{43}$), these windings being arranged at three or more circumferential positions and at three or more axial positions, wherein windings that are at the same circumferential position ($L_{11} + L_{31}$, $L_{12} + L_{32}$, $L_{13} + L_{33}$; $L_{21} + L_{41}$, $L_{22} + L_{42}$, $L_{23} + L_{43}$; $L_{11}$, $L_{12}$, $L_{13}$; $L_{21}$, $L_{22}$, $L_{23}$; $L_{31}$, $L_{32}$, $L_{33}$) and at different axial positions constitute a winding group, and in each winding group the windings are arranged to form a multiphase, in particular a three phase configuration.

14. The linear-rotary actuator of claim 13, wherein the first set of windings ($L_{11}$, $L_{12}$, $L_{13}$, $L_{21}$, $L_{22}$, $L_{23}$, $L_{31}$, $L_{32}$, $L_{33}$, $L_{41}$, $L_{42}$, $L_{43}$) constitutes a set of **combined** windings for generating both the radial forces for the magnetic bearing formed by the tubular linear actuator and for driving the mover (14), or wherein the first set of windings ($L_{11}$, $L_{12}$, $L_{13}$, $L_{21}$, $L_{22}$, $L_{23}$, $L_{31}$, $L_{32}$, $L_{33}$, $L_{41}$, $L_{42}$, $L_{43}$), constitutes a set of **bearing windings** for implementing the magnetic bearing formed by the tubular linear actuator, and the tubular linear actuator comprises a second, **separate** set of **drive windings** ($L_1$, $L_2$, $L_3$) for driving the mover.

## Patentansprüche

1. Linear-rotatorischer Aktuator, der eine elektrische Maschine ist, umfassend einen **linearen Aktuatorabschnitt** (1, 2, 6; 11, 12, 13) und einen **rotatorischen Aktuatorabschnitt** (3, 4, 7), die angeordnet sind, eine **Bewegungsvorrichtung** (14) so anzutreiben, um eine **Maschinenachse** (z) zu rotieren und sich entlang der Maschinenachse zu bewegen, wobei die **Bewegungsvorrichtung** (14) eine rohrförmige Form aufweist, die zwischen einem äußeren Stator (1) und einem inneren Stator (3) angeordnet ist, wobei
der lineare Aktuatorabschnitt (1, 2, 6; 11, 12, 13) ein rohrförmiger linearer Aktuator ist, wobei der rohrförmige lineare Aktuator einen Stator (11) und die Bewegungsvorrichtung (14) umfasst, wobei die Bewegungsvorrichtung (14) angeordnet ist, sich in eine Richtung einer Längsachse (z) des Stators (11) zu bewegen, wobei der Stator (11) der äußere Stator (1) oder der innere Stator (3) ist und eine Mehrzahl von Statorwicklungen (12) zum Antreiben der Bewegung der Bewegungsvorrichtung (14) umfasst, wobei der rotatorische Aktuatorabschnitt (3, 4, 7) mindestens einen ersten rotatorischen Aktuator (RA1) umfasst, der Statorwicklungen umfasst, **dadurch gekennzeichnet, dass** der erste rotatorische Aktuator ein Magnetlager darstellt, wobei der rohrförmige lineare Aktuator ein Magnetlager darstellt, wobei der rotatorische Aktuatorabschnitt (3, 4, 7) einen zweiten rotatorischen Aktuator (RA2) umfasst, der Statorwicklungen umfasst und ein Magnetlager darstellt, wobei der erste und zweite rotatorische Aktuator an separaten Stellen entlang der Maschinenachse (z) angeordnet sind, und dass die Statorwicklungen (12, $L_1$, $L_2$, $L_3$, $L_{11}$, $L_{12}$, $L_{13}$, $L_{21}$, $L_{22}$, $L_{23}$, $L_{31}$, $L_{32}$, $L_{33}$, $L_{41}$, $L_{42}$, $L_{43}$) des rohrförmigen linearen Aktuators angeordnet sind

• an drei oder mehr Umfangspositionen zum Erzeugen radialer Kräfte auf die Bewegungsvorrichtung (14);
• an drei oder mehr axialen Positionen des Stators (11) zum Erzeugen von Längskräften auf die Bewegungsvorrichtung (14).

2. Linear-rotatorischer Aktuator nach Anspruch 1, wobei die Statorwicklungen des ersten rotatorischen Aktuators (RA1) und die Statorwicklungen des zweiten rotatorischen Aktuators (RA2) derart ausgestaltet sind, dass sie separat mit Leistung versorgt werden können.

3. Linear-rotatorischer Aktuator nach Anspruch 1 oder Anspruch 2, umfassend eine elektrische Leistungsversorgung, die angeordnet ist, die rotatorischen Aktuatoren separat mit Leistung zu versorgen.

4. Linear-rotatorischer Aktuator nach einem der Ansprüche 1 bis 3, wobei die Statorwicklungen mindestens eines des ersten rotatorischen Aktuators (RA1) und des zweiten rotatorischen Aktuators (RA2) **kombinierte** Wicklungen zum Bereitstellen von sowohl Drehmomentkräften als auch radialen Kräften umfassen.

5. Linear-rotatorischer Aktuator nach einem der Ansprüche 1 bis 4, wobei die Statorwicklungen mindestens eines des ersten rotatorischen Aktuators (RA1) und des zweiten rotatorischen Aktuators (RA2) **separate** Wicklungen zum Bereitstellen von Drehmomentkräften und radialen Kräften umfassen.

6. Linear-rotatorischer Aktuator nach einem der Ansprüche 1 bis 5, wobei die Statorwicklungen und entsprechende Zähne des ersten rotatorischen Aktuators (RA1) um die Maschinenachse relativ zu den Statorwicklungen und entsprechenden Polen des zweiten rotatorischen Aktuators (RA2) um einen **Rastmomentausgleichswinkel** ($\Delta\varphi_{cog}$) rotiert werden.

7. Linear-rotatorischer Aktuator nach einem der Ansprüche 1 bis 6, wobei benachbarte Statorwicklungen (2) und entsprechende Pole des rohrförmigen linearen Aktuators in der Richtung der Maschinenachse (z) in regelmäßigen Abständen angeordnet sind, und Magnetpole von Permanentmagneten (6) des rohrförmigen linearen Aktuators in der Richtung der Maschinenachse (z) in den gleichen regelmäßigen Abständen angeordnet sind, außer mindestens einem Paar von benachbarten Statorwicklungen des rohrförmigen linearen Aktuators oder mindestens einem Paar von Permanentmagneten des rohrförmigen linearen Aktuators, die mit einem größeren Abstand ($\Delta z$), insbesondere mit mindestens eineinhalb Mal dem regelmäßigen Abstand, angeordnet sind.

8. Linear-rotatorischer Aktuator nach einem der Ansprüche 1 bis 7, wobei der **äußere** Stator (1) und äußere Spulen (2), die die Statorwicklungen des rohrförmigen linearen Aktuators sind, Teil des **linearen** Aktuatorabschnitts (1, 2, 6) sind und der **innere** Stator (3) und innere Spulen (4), die die Statorwicklungen des ersten und zweiten rotatorischen Aktuators sind, Teil des **rotatorischen** Aktuatorabschnitts (3, 4, 7) sind.

9. Linear-rotatorischer Aktuator nach einem der Ansprüche 1 bis 7, wobei der **äußere** Stator und äußere Spulen, die die Statorwicklungen des ersten und zweiten rotatorischen Aktuators sind, Teil des **rotatorischen** Aktuatorabschnitts sind und der **innere** Stator und innere Spulen, die die Statorwicklungen des rohrförmigen linearen Aktuators sind, Teil des rohrförmigen **linearen** Aktuators sind.

10. Linear-rotatorischer Aktuator nach einem der Ansprüche 1 bis 9, wobei Permanentmagnete (7) mindestens eines der rotatorischen Aktuatoren angeordnet sind, einen **Halbachzylinder** auszubilden.

11. Linear-rotatorischer Aktuator nach einem der Ansprüche 1 bis 10, wobei Permanentmagnete (6) des rohrförmigen linearen Aktuators angeordnet sind, ein **Halbach-Array** auszubilden.

12. Linear-rotatorischer Aktuator nach einem der vorhergehenden Ansprüche, wobei der lineare Aktuatorabschnitt (1, 2, 6; 11, 12, 13) mindestens zwei Wicklungsmodule (12a, 12b) zum unabhängigen Erzeugen radialer Kräfte an unterschiedlichen axialen Positionen umfasst.

13. Linear-rotatorischer Aktuator nach einem der vorhergehenden Ansprüche, wobei die Statorwicklungen (12) des rohrförmigen linearen Aktuators einen **ersten Satz von Wicklungen** ($L_{11}$, $L_{12}$, $L_{13}$, $L_{21}$, $L_{22}$, $L_{23}$, $L_{31}$, $L_{32}$, $L_{33}$, $L_{41}$, $L_{42}$, $L_{43}$) umfassen, wobei die Wicklungen an drei oder mehr Umfangspositionen und an drei oder mehr axialen Positionen angeordnet sind, wobei Wicklungen, die an derselben Umfangsposition ($L_{11} + L_{31}$, $L_{12} + L_{32}$, $L_{13} + L_{33}$; $L_{21} + L_{41}$, $L_{22} + L_{42}$, $L_{23} + L_{43}$; $L_{11}$, $L_{12}$, $L_{13}$; $L_{21}$, $L_{22}$, $L_{23}$; $L_{31}$, $L_{32}$, $L_{33}$) und an unterschiedlichen axialen Positionen sind, eine Wicklungsgruppe darstellen, und wobei in jeder Wicklungsgruppe die Wicklungen angeordnet sind, eine mehrphasige, insbesondere eine dreiphasige Auslegung auszubilden.

14. Linear-rotatorischer Aktuator nach Anspruch 13, wobei der erste Satz von Wicklungen ($L_{11}$, $L_{12}$, $L_{13}$, $L_{21}$, $L_{22}$, $L_{23}$, $L_{31}$, $L_{32}$, $L_{33}$, $L_{41}$, $L_{42}$, $L_{43}$) einen Satz von **kombinierten** Wicklungen zum Erzeugen von sowohl der radialen Kräfte für das durch den rohrförmigen linearen Aktuator ausgebildete Magnetlager als auch zum Antreiben der Bewegungsvorrichtung (14) darstellt,
oder wobei der erste Satz von Wicklungen ($L_{11}$, $L_{12}$, $L_{13}$, $L_{21}$, $L_{22}$, $L_{23}$, $L_{31}$, $L_{32}$, $L_{33}$, $L_{41}$, $L_{42}$, $L_{43}$) einen Satz von **Lagerwicklungen** zum Implementieren des durch den rohrförmigen linearen Aktuator ausgebildeten Magnetlagers darstellt, und der rohrförmige lineare Aktuator einen zweiten, **separaten** Satz von **Antriebswicklungen** ($L_1$, $L_2$, $L_3$) zum Antreiben der Bewegungsvorrichtung umfasst.

**Revendications**

1. Actionneur linéaire-rotatif qui est une machine électrique comprenant une section d'actionneur linéaire (1, 2, 6 ; 11, 12, 13) et une section d'actionneur rotative (3, 4, 7) conçues pour entraîner un élément mené (14) de manière à tourner autour d'un axe de machine (z) et de manière à se déplacer le long de l'axe de machine, l'élément mené (14) étant de forme tubulaire et disposé entre un stator extérieur (1) et un stator intérieur (3), dans lequel la section d'actionneur linéaire (1, 2, 6 ; 11, 12, 13) est un actionneur linéaire tubulaire, l'actionneur linéaire tubulaire comprenant un stator (11) et l'élément mené (14), l'élément mené (14) étant conçu pour se déplacer dans la direction d'un axe longitudinal (z) du stator (11), le stator (11) étant le stator extérieur (1) ou le stator intérieur (3) et comprenant une pluralité d'enroulements de stator (12) pour entraîner ce mouvement de l'élément mené (14), dans lequel la section d'actionneur rotative (3, 4, 7) comprend au moins un premier actionneur rotatif (RA1) comprenant des enroulements de stator, **caractérisé en ce que** le premier actionneur rotatif constitue un palier magnétique, l'actionneur linéaire tubulaire constitue un palier magnétique, la section d'actionneur rotative (3, 4, 7) comprend un deuxième actionneur rotatif (RA2), comprenant des enroulements de stator et constituant un palier magnétique, les premier et deuxième actionneurs rotatifs étant disposés à des emplacements distincts le long de l'axe de machine (z), et **en ce que** les enroulements de stator (12, $L_1$, $L_2$, $L_3$, $L_{11}$, $L_{12}$, $L_{13}$, $L_{21}$, $L_{22}$, $L_{23}$, $L_{31}$, $L_{32}$, $L_{33}$, $L_{41}$, $L_{42}$, $L_{43}$) de l'actionneur linéaire tubulaire sont disposés

   • à trois ou plus de trois positions circonférentielles pour générer des forces radiales sur l'élément mené (14) ;
   • à trois ou plus de trois positions axiales du stator (11), pour générer des forces longitudinales sur l'élément mené (14).

2. Actionneur linéaire-rotatif selon la revendication 1, dans lequel les enroulements de stator du premier actionneur rotatif (RA1) et les enroulements de stator du deuxième actionneur rotatif (RA2) sont configurés de telle sorte qu'ils peuvent être alimentés séparément.

3. Actionneur linéaire-rotatif selon la revendication 1 ou la revendication 2, comprenant une alimentation électrique qui est conçue pour alimenter les actionneurs rotatifs séparément.

4. Actionneur linéaire-rotatif selon l'une des revendications 1 à 3, dans lequel les enroulements de stator du premier actionneur rotatif (RA1) et/ou du deuxième actionneur rotatif (RA2) comprennent des enroulements combinés pour produire à la fois des forces de couple et des forces radiales.

5. Actionneur linéaire-rotatif selon l'une des revendications 1 à 4, dans lequel les enroulements de stator du premier actionneur rotatif (RA1) et/ou du deuxième actionneur rotatif (RA2) comprennent des enroulements distincts pour produire des forces de couple et des forces radiales.

6. Actionneur linéaire-rotatif selon l'une des revendications 1 à 5, dans lequel les enroulements de stator et des dents correspondantes du premier actionneur rotatif (RA1) sont entraînés en rotation autour de l'axe de machine, par rapport aux enroulements de stator et à des pôles correspondants du deuxième actionneur rotatif (RA2), d'un angle de compensation de saillance ($\Delta\varphi_{cog}$).

7. Actionneur linéaire-rotatif selon l'une des revendications 1 à 6, dans lequel des enroulements de stator voisins (2) et des pôles correspondants de l'actionneur linéaire tubulaire sont disposés, dans la direction de l'axe de machine (z), à des intervalles réguliers, et des pôles magnétiques d'aimants permanents (6) de l'actionneur linéaire tubulaire sont disposés, dans la direction de l'axe de machine (z), aux mêmes intervalles réguliers, à l'exception d'au moins une paire d'enroulements de stator voisins de l'actionneur linéaire tubulaire ou d'au moins une paire d'aimants permanents de l'actionneur linéaire tubulaire qui sont disposés suivant un intervalle plus grand ($\Delta z$), en particulier suivant au moins approximativement une fois et demie l'intervalle régulier.

8. Actionneur linéaire-rotatif selon l'une des revendications 1 à 7, dans lequel le stator extérieur (1) et des bobines extérieures (2), qui sont les enroulements de stator de l'actionneur linéaire tubulaire, font partie de la section d'actionneur linéaire (1, 2, 6) et le stator intérieur (3) et des bobines intérieures (4), qui sont les enroulements de stator des premier et deuxième actionneurs rotatifs, font partie de la section d'actionneur rotative (3, 4, 7).

9. Actionneur linéaire-rotatif selon l'une des revendications 1 à 7, dans lequel le stator extérieur et des bobines extérieures, qui sont les enroulements de stator des premier et deuxième actionneurs rotatifs, font partie de la section d'actionneur rotative et le stator intérieur et des bobines intérieures, qui sont les enroulements de stator de l'actionneur linéaire tubulaire, font partie de l'actionneur linéaire tubulaire.

10. Actionneur linéaire-rotatif selon l'une des revendications 1 à 9, dans lequel des aimants permanents (7) d'au moins l'un des actionneurs rotatifs sont disposés de manière à former un cylindre de Halbach.

11. Actionneur linéaire-rotatif selon l'une des revendications 1 à 10, dans lequel des aimants permanents (6) de l'actionneur linéaire tubulaire sont disposés de manière à former un réseau de Halbach.

12. Actionneur linéaire-rotatif selon l'une des revendications précédentes, dans lequel la section d'actionneur linéaire (1, 2, 6 ; 11, 12, 13) comprend au moins deux modules d'enroulements (12a, 12b) pour générer indépendamment des forces radiales à différentes positions axiales.

13. Actionneur linéaire-rotatif selon l'une des revendications précédentes, dans lequel les enroulements de stator (12) de l'actionneur linéaire tubulaire comprennent un premier ensemble d'enroulements ($L_{11}$, $L_{12}$, $L_{13}$, $L_{21}$, $L_{22}$, $L_{23}$, $L_{31}$, $L_{32}$, $L_{33}$, $L_{41}$, $L_{42}$, $L_{43}$), ces enroulements étant disposés à trois ou plus de trois positions circonférentielles et à trois ou plus de trois positions axiales, dans lequel des enroulements qui sont à la même position circonférentielle ($L_{11} + L_{31}$, $L_{12} + L_{32}$, $L_{13} + L_{33}$ ; $L_{21} + L_{41}$, $L_{22} + L_{42}$, $L_{23} + L_{43}$ ; $L_{11}$, $L_{12}$, $L_{13}$ ; $L_{21}$, $L_{22}$, $L_{23}$ ; $L_{31}$, $L_{32}$, $L_{33}$) et à différentes positions axiales constituent un groupe d'enroulements, et dans chaque groupe d'enroulements les enroulements sont disposés de manière à former une configuration polyphasée, en particulier triphasée.

14. Actionneur linéaire-rotatif selon la revendication 13, dans lequel le premier ensemble d'enroulements ($L_{11}$, $L_{12}$, $L_{13}$, $L_{21}$, $L_{22}$, $L_{23}$, $L_{31}$, $L_{32}$, $L_{33}$, $L_{41}$, $L_{42}$, $L_{43}$) constitue un ensemble d'enroulements combinés pour générer à la fois les forces radiales pour le palier magnétique formé par l'actionneur linéaire tubulaire et pour entraîner l'élément mené (14), ou dans lequel le premier ensemble d'enroulements ($L_{11}$, $L_{12}$, $L_{13}$, $L_{21}$, $L_{22}$, $L_{23}$, $L_{31}$, $L_{32}$, $L_{33}$, $L_{41}$, $L_{42}$, $L_{43}$) constitue un ensemble d'enroulements de palier pour la mise en œuvre du palier magnétique formé par l'actionneur linéaire tubulaire, et l'actionneur linéaire tubulaire comprend un deuxième ensemble, distinct, d'enroulements d'entraînement ($L_1$, $L_2$, $L_3$) pour entraîner l'élément mené.

**Fig. 1a**

**Fig. 1b**

A-A'

B-B'

**Fig. 1c**

**Fig. 1d**

$\vec{F}_z$

**Fig. 2a**

| ① | ② | ③ | ④ | ⑤ | ⑥ |
|---|---|---|---|---|---|
| $+i_1^z$ | $+i_3^z$ | $+i_2^z$ | $+i_1^z$ | $+i_3^z$ | $+i_2^z$ |

$i_1^z = 48.3\,\mathrm{A}$

$i_2^z = 48.3\,\mathrm{A}$

$i_3^z = -96.7\,\mathrm{A}$

$\vec{T}$

**Fig. 2b**

| ① | $+i_1^r$ |
|---|---|
| ② | $-i_2^r$ |
| ③ | $+i_3^r$ |
| ④ | $-i_1^r$ |
| ⑤ | $+i_2^r$ |
| ⑥ | $-i_3^r$ |

$i_1^r = 0,\ i_2^r = 118.4\,\mathrm{A},\ i_3^r = -118.4\,\mathrm{A}$

$\vec{F}_b$

**Fig. 2c**

| ① | $+i_1^b$ |
|---|---|
| ② | $+i_3^b$ |
| ③ | $+i_2^b$ |
| ④ | $+i_1^b$ |
| ⑤ | $+i_3^b$ |
| ⑥ | $+i_2^b$ |

$i_1^b = 0,\ i_2^b = 118.4\,\mathrm{A},\ i_3^b = -118.4\,\mathrm{A}$

$$\vec{T} \wedge \vec{F}_{\mathrm{b}}$$

| | |
|---|---|
| ① | $i_1 = +i_1^{\mathrm{r}} + i_1^{\mathrm{b}}$ |
| ② | $i_2 = -i_2^{\mathrm{r}} + i_3^{\mathrm{b}}$ |
| ③ | $i_3 = +i_3^{\mathrm{r}} + i_2^{\mathrm{b}}$ |
| ④ | $i_4 = -i_1^{\mathrm{r}} + i_1^{\mathrm{b}}$ |
| ⑤ | $i_5 = +i_2^{\mathrm{r}} + i_3^{\mathrm{b}}$ |
| ⑥ | $i_6 = -i_3^{\mathrm{r}} + i_2^{\mathrm{b}}$ |

**Fig. 2d**   $i_1 = 0, i_2 = -168\ \mathrm{A}\ , i_3 = 0, i_4 = 0, i_5 = 0, i_6 = 168\ \mathrm{A}$

**Fig. 3**

**Fig. 4a**

**Fig. 4b**

**Fig. 5**

**Fig. 6**

**Fig. 7a**

**Fig. 7b**

**Fig. 7c**

**Fig. 7d**

**Fig. 7e**

**Fig. 7f**

**Fig. 7g**

**Fig. 8**

**Fig. 9a**

**Fig. 9b**

pos. 1

| $\Psi_3$ | $\Psi_3$ | $\Psi_3$ | $\Psi_3$ | $\sum \Psi = 0$ |
| $\Psi_2$ | $\Psi_2$ | $\Psi_2$ | $\Psi_2$ | $\sum \Psi = 0$ |
| $\Psi_1$ | $\Psi_1$ | $\Psi_1$ | $\Psi_1$ | $\sum \Psi = 0$ |

pos. 2

| $\Psi_3$ | $\Psi_3$ | $\Psi_3$ | $\Psi_3$ | $\sum \Psi = 0$ |
| $\Psi_2$ | $\Psi_2$ | $\Psi_2$ | $\Psi_2$ | $\sum \Psi = 0$ |
| $\Psi_1$ | $\Psi_1$ | $\Psi_1$ | $\Psi_1$ | $\sum \Psi = 0$ |

**Fig. 10**

**Fig. 11**

**Fig. 12a**

**Fig. 12b**

**Fig. 12c**

**Fig. 13**

**Fig. 14**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105762991 A

- US 2003071530 A1

**Non-patent literature cited in the description**

- **J. PRUDELL ; M. STODDARD ; E. AMON ; T. K. BREKKEN ; A. VON JOUANNE.** A Permanent- Magnet Tubular Linear Generator for Ocean Wave Energy Conversion. *IEEE Transactions on Industry Applications,* 2010, vol. 46 (6), 2392-2400
- **Z. JIAO ; T. WANG ; L. YAN.** Design of a Tubular Linear Oscillating Motor with Novel Compound Halbach Magnet Array. *IEEE/ASME Transactions on Mechatronics,* 2016
- **N. C. TSAI ; C. W. CHIANG.** Design and Analysis of Magnetically-Drive Actuator Applied for Linear Compressor. *Mechatronics,* 2010, vol. 20 (5), 596-603
- **E. A. DA COSTA ; I. E. CHABU ; J. J. DA CRUZ.** Active Magnetic Bearing for Tubular Linear Induction Motor Applied to Onshore Oil Exploitation. *Proc. of 12th International Symposium on Magnetic Bearings (ISMB),* August 2010

- **S. SILBER ; W. AMRHEIN ; P. BOSCH ; R. SCHOB ; N. BARLETTA.** Design aspects of bearingless slice motors. *IEEE/ASME Transactions on Mechatronics,* December 2005, vol. 10 (6), 611-617
- **K. J. MEESSEN ; J. J. H. PAULIDES ; E. A. LOMONOVA.** Analysis and Design Considerations of a 2-DoF Rotary-Linear Actuator. *Proc. on IEEE International Electric Machines & Drives Conference (IEMDC),* 2011, 336-341
- **T. BAUMGARTNER ; R. M. BURKART ; J. W. KOLAR.** Analysis and Design of a 300-W 500 000-r/min Slotless Self-Bearing Permanent-Magnet Motor. *IEEE Transactions on Industrial Electronics,* 2014, vol. 61 (8), 4326-4336
- **L. XU ; M. LIN ; X. FU ; X. FU ; X. ZHU ; C. ZHANG ; W. WU.** Orthogonal Magnetic Field Analysis of a Double Stator Linear-Rotary Permanent Magnet Motor with Orthogonally Arrayed Permanent Magnets. *IEEE Transactions on Magnetics*